# EUROPÄISCHE PATENTANMELDUNG

(11) **EP 3 470 319 A1**
(43) Veröffentlichungstag der Anmeldung: **17.04.2019**
(21) Anmeldenummer: 18199619.0
(22) Anmeldetag: 10.10.2018
(51) Int. Cl.: B62M 6/65, A63C 17/01, B62K 3/00, B62K 5/08, B62K 5/10

(54) **ELEKTRISCH BETRIEBENER DREIRAD-ROLLER**

(30) Priorität: 11.10.2017 CN 201721366250 U
(71) Anmelder: 4 Traders GmbH, 45879 Gelsenkirchen (DE)
(72) Erfinder: Linting, Hu, Wuyi Jinhua City, Zhejiang (CN)
(74) Vertreter: Schneiders & Behrendt PartmbB Rechtsanwälte - Patentanwälte

(57) **Zusammenfassung**

Elektrisch betriebener Dreirad-Roller, umfassend ein Trittbrett (3), ein Vorderantriebsrad (5), Hinterräder (1, 2) und eine Lenkstangenmontage (8), wobei die Hinterräder (1, 2) durch eine Lenkkonstruktion an der Unterseite des Trittbretts (3) angebracht sind, wobei die Lenkkonstruktion eine Stützhalterung (13), eine Drehzentralachse (12), ein Drehungsteil (11), einen linken Schwenkarm (15), einen rechten Schwenkarm (9), eine linke Zugstange (14) und eine rechte Zugstange (10) umfasst, wobei das vordere Teil der Stützhalterung (13) an der Unterseite des Trittbretts (3) befestigt ist, wobei an dem hinteren Teil der Stützhalterung (13) die Drehzentralachse (12) vorgesehen ist, wobei das Drehungsteil (11) drehbar außen um die Drehzentralachse (12) vorgesehen ist, wobei an den beiden Seiten links und rechts des Drehungsteils (11) jeweils eine Kurzachse vorgesehen ist, wobei das obere Ende des linken Schwenkarms (15) drehbar an der Kurzachse der linken Seite des Drehungsteils (11) angebracht ist, wobei das untere Ende des linken Schwenkarms (15) mit einem linken Hinterrad (1) versehen ist, wobei das obere Ende des rechten Schwenkarms (9) drehbar an der Kurzachse der rechten Seite des Drehungsteils (11) angebracht ist, wobei das untere Ende des rechten Schwenkarms (9) mit einem rechten Hinterrad (2) versehen ist. Die vorliegende Erfindung stellt einen elektrisch betrieben Dreirad-Roller mit flexibler und zuverlässiger Kurvenfahrt zur Verfügung.

## Beschreibung

### Technisches Gebiet

Die vorliegende Erfindung betrifft das technische Gebiet elektrisch betriebener Roller, insbesondere einen elektrisch betriebenen Dreirad-Roller.

### Stand der Technik

Die Konstruktion herkömmlicher Roller weist hauptsächlich ein Trittbrett, eine Vorderradhalterung, zwei Vorderrad- und Hinterradhalterungen sowie zwei Hinterräder auf. Bei der Verwendung ist ein Fuß auf dem Trittbrett befindlich, während der andere Fuß Reibungskraft mit dem Boden erzeugt und den Roller zur Fahrt nach vorne antreibt. Bei Kurvenfahrt des betreffenden Rollers ist die Kurvenfahrt der vorderen beiden Räder unflexibel, was zu einer Verlagerung des Schwerpunkts des Körpers des Verwenders führt und leicht Umstürzen des Rollers und Hinfallen verursacht.

### Gegenstand der Erfindung

Zwecks Behebung der Mängel bei elektrisch betriebenen Rollern nach dem Stand der Technik mit leichtem Umstürzen und Hinfallen während der Kurvenfahrt stellt die vorliegende Erfindung einen elektrisch betriebenen Dreiradroller mit flexibler und zuverlässiger Kurvenfahrt zur Verfügung.

Die technische Konzeption der vorliegenden Erfindung zur Lösung des entsprechenden technischen Problems ist wie folgt:

Elektrisch betriebener Dreirad-Roller, umfassend ein Trittbrett, ein Vorderantriebsrad, Hinterräder und eine Lenkstangenmontage, wobei das Vorderantriebsrad durch eine Vordergabel unterhalb der Lenkstangenmontage angebracht sind, wobei die Hinterräder ein linkes Hinterrad und ein rechtes Hinterrad umfassen und jeweils an der linken und rechten Seite am hinteren Ende des Trittbretts vorgesehen sind, wobei die Hinterräder durch eine Lenkkonstruktion an dem unteren Teil des Trittbretts angebracht sind, wobei die Lenkkonstruktion eine Stützhalterung, eine Drehzentralachse, ein Drehungsteil, einen linken Schwenkarm, einen rechten Schwenkarm, eine linke Zugstange und eine rechte Zugstange umfasst, wobei das vordere Teil der Stützhalterung an dem unteren Teil des Trittbretts befestigt ist, wobei an dem hinteren Teil der Stützhalterung die Drehzentralachse vorgesehen ist, wobei die Drehzentralachse zwischen der Stützhalterung und dem Trittbrett befindlich und bei aufrecht stehendem Roller vertikal angeordnet ist, wobei das Drehungsteil drehbar außen um die Drehzentralachse vorgesehen ist, wobei an den beiden Seiten links und rechts des Drehungsteils jeweils eine im Wesentlichen horizontal verlaufende Kurzachse vorgesehen ist, wobei das obere Ende des linken Schwenkarms drehbar an der Kurzachse der linken Seite des Drehungsteils angebracht ist, wobei das untere Ende des linken Schwenkarms mit einem linken Hinterrad versehen ist, wobei das obere Ende des rechten Schwenkarms drehbar an der Kurzachse der rechten Seite des Drehungsteils angebracht ist, wobei das untere Ende des rechten Schwenkarms mit einem rechten Hinterrad versehen ist, wobei das untere Ende der linken Zugstange per Gelenk mit der Innenseite des linken Schwenkarms verbunden ist, wobei das obere Ende der linken Zugstange per Gelenk mit der linken Seite der Stützhalterung verbunden ist, wobei das untere Ende der rechten Zugstange per Gelenk mit der Innenseite des rechten Schwenkarms verbunden ist und wobei das obere Ende der rechten Zugstange per Gelenk mit der rechten Seite der Stützhalterung verbunden ist.

Vorteilhafterweise ist weiter vorgesehen, dass bei dem elektrisch betriebenen Dreirad-Roller die Vordergabel durch eine Rollerbrücke mit dem Trittbrett verbunden ist, wobei auf der Unterseite des Trittbretts außerdem eine Elektrobatterie vorgesehen ist.

Die Vorteile der vorliegenden Erfindung sind hauptsächlich: flexiblere und zuverlässigere Kurvenfahrt.

### Erläuterung der Figuren

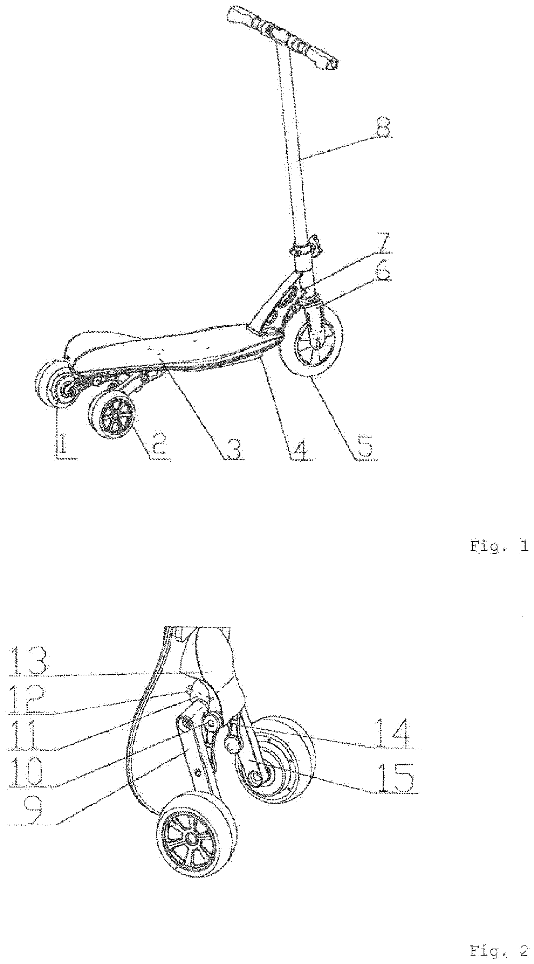

Bei Fig. 1 handelt es sich um die Darstellung der Konstruktion der vorliegenden Erfindung.
Bei Fig. 2 handelt es sich um die Darstellung der Lenkkonstruktion der Hinterräder.

### Ausführungsbeispiele

Nachstehend aufgeführt erfolgt anhand der beigefügten Abbildungen eine beispielhafte Beschreibung der vorliegenden Erfindung.

Wie in Fig. 1 und Fig. 2 gezeigt, umfasst der elektrisch betriebene Dreirad-Roller ein Trittbrett 3, ein Vorderantriebsrad 5, Hinterräder und eine Lenkstangenmontage 8, wobei das Antriebsvorderrad 5 durch eine Vordergabel 6 unterhalb der Lenkstangenmontage 8 angebracht ist, wobei die Hinterräder ein linkes Hinterrad 1 und ein rechtes Hinterrad 2 umfassen und jeweils an der linken und rechten Seite am hinteren Ende des Trittbretts 3 vorgesehen sind, wobei die Hinterräder durch eine Lenkkonstruktion an der Unterseite des Trittbretts 3 angebracht sind, wobei die Lenkkonstruktion eine Stützhalterung 13, eine Drehzentralachse 12, ein Drehungsteil 11, einen linken Schwenkarm 15, einen rechten Schwenkarm 9, eine linke Zugstange 14 und eine rechte Zugstange 10 umfasst, wobei das vordere Teil der Stützhalterung 13 an der Unterseite des Trittbretts 3 befestigt ist, wobei an dem hinteren Teil der Stützhalterung 13 die Drehzentralachse 12 vorgesehen ist, wobei die Drehzentralachse 12 zwischen der Stützhalterung 13 und dem Trittbrett 3 befindlich und vertikal angeordnet ist, wobei das Drehungsteil 11 drehbar außen um die Drehzentralachse 12 vorgesehen ist, wobei an den beiden Seiten links und rechts des Drehungsteils 11 jeweils eine Kurzachse vorgesehen ist, wobei das obere Ende des linken Schwenkarms 15 drehbar an der Kurzachse der linken Seite des Drehungsteils 11 angebracht ist, wobei das untere Ende des linken Schwenkarms 15 mit einem linken Hinterrad 1 versehen ist, wobei das obere Ende des rechten Schwenkarms 9 drehbar an der Kurzachse der rechten Seite des Drehungsteils 11 angebracht ist, wobei das untere Ende des rechten Schwenkarms 9 mit einem rechten Hinterrad 2 versehen ist, wobei das untere Ende der linken Zugstange 14 per Gelenk mit der Innenseite des linken Schwenkarms 15 verbunden ist, wobei das obere Ende der linken Zugstange 14 per Gelenk mit der linken Seite der Stützhalterung 13 verbunden ist, wobei das untere Ende der rechten Zugstange 10 per Gelenk mit der Innenseite des rechten Schwenkarms 9 verbunden ist, wobei das obere Ende der rechten Zugstange 10 per Gelenk mit der rechten Seite der Stützhalterung 13 verbunden ist.

Weiter ist vorgesehen, dass die Vordergabel 6 durch eine Rollerbrücke 7 mit dem Trittbrett 3 verbunden ist, wobei an der Unterseite des Trittbretts 3 außerdem eine Elektrobatterie 4 vorgesehen ist.

Bei dem vorliegenden praktischen Ausführungsbeispiel ist das Drehungsteil 11 um die Drehzentralachse 12 drehbar, wobei der rechte Schwenkarm 9 und der linke Schwenkarm 15 um das Drehungsteil 11 drehbar sind.

Das Betriebsprinzip der vorliegenden Erfindung ist wie folgt: der rechte Schwenkarm 9, die rechte Zugstange 10, das Drehungsteil 11, die Drehzentralachse 12, die Stützhalterung 13 die linke Zugstange 14 und der linke Schwenkarm 15 bilden ein Lenksystem und ein Antriebselektromotor nimmt das Vorderantriebsrad 5 zur Drehung mit, so dass die Vorwärtsfahrt des Fahrzeugs veranlasst wird. Weil durch die Lenkstangenmontage 8 die Kontrolle der Lenkung des Fahrzeugs erfolgt, erfolgt während der Fahrt durch Tritt auf das Trittbrett eine Neigung des Trittbretts, wobei das Drehungsteil 11 um die Drehzentralachse 12 ausgelenkt wird, wobei der rechte Schwenkarm 9 und der linke Schwenkarm 15 gleichzeitig um das Drehungsteil 11 ausgelenkt werden, wobei das Lenksystem bei Kurvenfahrt automatisch einen Lenkkurve bildet, so dass die Kurvenfahrt des Fahrzeugs flexibler und zuverlässiger ist.

Die vorliegende Erfindung wird nicht lediglich im Bereich des Freizeitsports verwendet, sondern kann auch als Verkehrsmittel für die Personenbeförderung verwendet werden. Im Zuge der gesellschaftlichen Entwicklung stoßen umweltfreundliche und neuartige elektrisch betriebene Dreirad-Roller auf zunehmend positive Resonanz, wobei solche elektrisch betriebenen Dreirad-Roller für Kurzstreckenfahrten geeignet sind und wobei in der Gegenwart mit Propagierung von Energieeinsparung und Umweltschutz zwangläufig neue Veränderungen und Gegebenheiten bestehen.

## Patentansprüche

1. Elektrisch betriebener Dreirad-Roller, umfassend ein Trittbrett (3), ein Vorderantriebsrad (5), Hinterräder (1, 2) und eine Lenkstangenmontage (8), wobei das Vorderantriebsrad (5) durch eine Vordergabel (6) unterhalb der Lenkstangenmontage (8) angebracht ist, wobei die Hinterräder (1, 2) ein linkes Hinterrad (1) und ein rechtes Hinterrad (2) umfassen und jeweils an der linken und rechten Seite am hinteren Ende des Trittbretts (3) vorgesehen sind,
**dadurch gekennzeichnet,**
**dass** die Hinterräder (1, 2) durch eine Lenkkonstruktion an der Unterseite des Trittbretts (3) angebracht sind, wobei die Lenkkonstruktion eine Stützhalterung (13), eine Drehzentralachse (12), ein Drehungsteil (11), einen linken Schwenkarm (15), einen rechten Schwenkarm (9), eine linke Zugstange (14) und eine rechte Zugstange (10) umfasst, wobei das vordere Teil der Stützhalterung (13) an der Unterseite des Trittbretts (3) befestigt ist, wobei an dem hinteren Teil der Stützhalterung (13) die Drehzentralachse (12) vorgesehen ist, wobei die Drehzentralachse (12) zwischen der Stützhalterung (13) und dem Trittbrett (3) befindlich und vertikal angeordnet ist, wobei das Drehungsteil (11) drehbar außen um die Drehzentralachse (12) vorgesehen ist, wobei an den beiden Seiten links und rechts des Drehungsteils (11) jeweils eine Kurzachse vorgesehen ist, wobei das obere Ende des Schwenkarms (15) drehbar an der Kurzachse der linken Seite des Drehungsteils (11) angebracht ist, wobei das untere Ende des linken Schwenkarms (15) mit einem linken Hinterrad (1) versehen ist, wobei das obere Ende des rechten Schwenkarms (9) drehbar an der Kurzachse der rechten Seite des Drehungsteils (11) angebracht ist, wobei das untere Ende des rechten Schwenkarms (9) mit einem rechten Hinterrad (2) versehen ist, wobei das untere Ende der linken Zugstange (14) per Gelenk mit der Innenseite des linken Schwenkarms (15) verbunden ist, wobei das obere Ende der linken Zugstange (14) per Gelenk mit der linken Seite der Stützhalterung (13) verbunden ist, wobei das untere Ende der rechten Zugstange (10) per Gelenk mit der Innenseite des rechten Schwenkarms (9) verbunden ist, wobei das obere Ende der rechten Zugstange (10) per Gelenk mit der rechten Seite der Stützhalterung (13) verbunden ist.

2. Elektrisch betriebener Dreirad-Roller nach Anspruch 1, **dadurch gekennzeichnet, dass** die Vordergabel (6) durch eine Rollerbrücke (7) mit dem Trittbrett (3) verbunden ist, wobei an der Unterseite des Trittbretts (3) eine Elektrobatterie (4) vorgesehen ist.
